# FASCICULE DE BREVET EUROPEEN

(11) **EP 4 526 621 B1**
(45) Date de publication et mention de la délivrance du brevet: **27.05.2026**
(21) Numéro de dépôt: 23732171.6
(22) Date de dépôt: 19.05.2023
(51) Int. Cl.: G01B 11/06

(54) **DISPOSITIF DE MESURE CONFOCALE CHROMATIQUE COMPRENANT UNE CAMÉRA**
CHROMATISCH-KONFOKALE MESSVORRICHTUNG MIT EINER KAMERA
CHROMATIC CONFOCAL MEASUREMENT DEVICE COMPRISING A CAMERA

(30) Priorité: 19.05.2022 FR 2204770
(43) Date de publication de la demande: 26.03.2025
(73) Titulaire: SCIENCES ET TECHNIQUES INDUSTRIELLES DE LA LUMIERE, 13855 Aix-en-Provence (FR)
(72) Inventeur: GAILLARD-GROLEAS, Jérôme, 13090 Aix-en-Provence (FR); GERAND, Sébastien, 13700 Marignane (FR); MOUSSU, Gabrielle, 13127 Vitrolles (FR)
(74) Mandataire: Regimbeau
(86) Numéro de dépôt international: PCT/FR2023/050718
(87) Numéro de publication internationale: WO 2023/222987

(56) Documents cités:
- EP-A1- 3 940 336
- US-A1- 2006 109 483
- US-A1- 2017 010 096

## Description

### DOMAINE TECHNIQUE

La présente demande concerne de manière générale le domaine de l'inspection et du contrôle optique d'une pièce, et plus précisément la mesure d'une hauteur et/ou une orientation ponctuelle d'une surface d'un échantillon à l'aide d'un dispositif optique.

### ETAT DE LA TECHNIQUE

Il existe à ce jour des dispositifs de mesure du type comparateurs optiques comprenant un crayon optique permettant de mesurer ponctuellement et sans contact la hauteur, l'épaisseur et/ou l'orientation locale d'une surface d'un échantillon. Le diamètre du faisceau lumineux au niveau de la surface de l'échantillon (généralement désigné par le terme anglais « spot ») est généralement compris entre 1.5 µm et 50 µm, selon l'objectif choisi.

De tels comparateurs peuvent notamment être basés sur le principe du codage confocal chromatique dans lequel une lumière, généralement polychromatique, est focalisée sur la surface à étudier par un crayon optique comprenant un objectif à chromatisme axial. La répartition spectrale du faisceau lumineux est ensuite analysée afin d'identifier la longueur d'onde de la source lumineuse pour laquelle on obtient une image nette sur la surface, ce qui permet d'en déduire la distance entre l'objectif et la surface.

Certains de ces comparateurs optiques nécessitent de pouvoir visualiser le point de mesure sur la surface de l'échantillon étudier. Or, lorsque la mesure est réalisée avec un objectif confocal chromatique, le point de mesure est matérialisé par un très petit spot lumineux qui, de surcroît, peut ne pas être visible selon le type de surface à mesure. Par ailleurs, la surface à étudier est elle-même très petite et peut nécessiter une assistance optique afin de positionner correctement le spot de mesure à l'endroit souhaité sur la surface.

Il a donc été proposé d'utiliser des caméras afin de positionner correctement le crayon optique par rapport à la surface à étudier. Par exemple, il a été proposé de monter le crayon optique et la caméra sur un robot configuré pour placer successivement la caméra puis le crayon optique au-dessus de la surface à étudier, afin d'ajuster la position du crayon optique par rapport à la surface. Toutefois, cette solution nécessite une station de mesure motorisée, ce qui implique un coût important et augmente drastiquement l'encombrement de l'installation.

Il a également été proposé de placer la caméra sur le côté du crayon optique. Toutefois, dans le cas de surfaces rugueuses, la zone de mesure peut se trouver masquée par des reliefs.

Il a enfin été proposé de dévier une partie du faisceau optique, grâce à un cube séparateur placé entre la source lumineuse et l'objectif, vers une caméra placée à proximité du crayon optique. Le document US 2017/0010096 A1 divulgue une solution similaire avec un séparateur de faisceau comportant une zone circulaire réfléchissante entourée d'une zone annulaire transparente. Alternativement, une caméra est placée directement au milieu du faisceau de mesure en amont de l'objectif confocal chromatique. Toutefois, l'image obtenue à travers l'objectif confocal chromatique n'est nette que pour une longueur d'onde donnée, qui correspond à la longueur d'onde focalisée sur la surface à mesurée. De plus, les crayons optiques étant optimisés au centre du champ, l'image obtenue comprend des aberrations importantes qui rendent difficiles l'exploitation de l'image. Le système est en outre encombrant et coûteux.

### RESUME DE L'INVENTION

Un objectif de la présente demande est donc de proposer un dispositif de mesure, par exemple d'une hauteur et/ou d'une épaisseur, d'une surface d'un échantillon permettant de visualiser de manière simple, efficace et précise le point de mesure sur la surface à étudier, qui soit d'un coût et d'un encombrement raisonnable.

Il est à cet effet proposé, selon un premier aspect, un dispositif de mesure confocale chromatique d'un paramètre d'une surface d'un échantillon, le dispositif comprenant :
- une source lumineuse configurée pour générer un faisceau lumineux ;
- un crayon optique comprenant un objectif à chromatisme axial configuré pour appliquer le faisceau lumineux sur la surface de l'échantillon, le crayon optique présentant une extrémité d'entrée raccordée à la source lumineuse et une extrémité de sortie configurée pour être placée à proximité de la surface de l'échantillon ; et
- une caméra fixée à proximité de l'extrémité de sortie du crayon optique, entre l'objectif à chromatisme axial et la surface de l'échantillon, de sorte qu'une partie du faisceau lumineux provenant de la source lumineuse et sortant de l'objectif à chromatisme axial est obturée par la caméra au niveau de l'extrémité de sortie du crayon optique et qu'une autre partie du faisceau lumineux contourne la caméra et atteint la surface de l'échantillon.

Certaines caractéristiques préférées mais non limitatives du dispositif de mesure sont les suivantes, prises individuellement ou en combinaison :
- le crayon optique comprend une lentille placée à proximité de l'extrémité de sortie du crayon optique, une première surface, correspondant à la projection orthogonale de la lentille dans un premier plan qui est perpendiculaire à un axe de propagation du faisceau lumineux à travers la lentille, étant plus grande qu'une deuxième surface, correspondant à la projection orthogonale de la caméra dans le premier plan, de sorte que la caméra n'obture que partiellement le champ optique de la lentille ;
- la première surface est au moins deux fois plus grande que la deuxième surface, de préférence au moins quatre fois plus grande ;
- un passage traversant est formé dans la lentille et la caméra est logée au moins partiellement dans le passage traversant ;
- la lentille présente un chromatisme axial et fait partie de l'objectif à chromatisme axial ;
- la lentille est achromatique et est placée entre l'objectif à chromatisme axial et la caméra, un passage traversant étant formé dans la lentille achromatique et la caméra étant logée au moins partiellement dans le passage traversant ;
- la caméra est placée entre le crayon optique et la surface à mesurer ;
- le dispositif de mesure comprend en outre une caméra supplémentaire, fixée à proximité de l'extrémité de sortie du crayon optique, entre l'objectif à chromatisme axial et la surface de l'échantillon de sorte qu'une partie du faisceau lumineux provenant de la source lumineuse et sortant de l'objectif à chromatisme axial est également obturée par la caméra supplémentaire au niveau de l'extrémité de sortie du crayon optique et que l'autre partie du faisceau lumineux contourne également la caméra supplémentaire et atteint la surface de l'échantillon ;
- une profondeur de champ de la caméra est comprise entre 2 mm et 100 mm ;
- le dispositif de mesure comprend en outre une lumière fixée sur le crayon optique et configurée pour éclairer la surface de l'échantillon ;
- la lumière est intégrée à la caméra ou est rapportée et fixée sur le crayon optique à proximité de l'extrémité de sortie ; et/ou
- le dispositif de mesure comprend en outre un système d'analyse spectrale configuré pour déterminer une répartition spectrale du faisceau lumineux réfléchi par la surface de l'échantillon.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue schématique d'un premier exemple de réalisation d'un crayon optique d'un dispositif de mesure conforme à un mode de réalisation de l'invention ;
La figure 2 est une vue schématique d'un deuxième exemple de réalisation d'un crayon optique d'un dispositif de mesure conforme à un mode de réalisation de l'invention ;
La figure 3 est une vue schématique d'un troisième exemple de réalisation d'un crayon optique d'un dispositif de mesure conforme à un mode de réalisation de l'invention ;
La figure 4 est une vue schématique d'un quatrième exemple de réalisation d'un crayon optique d'un dispositif de mesure conforme à un mode de réalisation de l'invention ; et
La figure 5 illustre de manière très schématique un dispositif de mesure conforme à un mode de réalisation de l'invention et comprenant un cinquième exemple de crayon optique.

Sur l'ensemble des figures, les éléments similaires portent des références identiques.

### DESCRIPTION DETAILLEE D'UN MODE DE REALISATION

Un dispositif de mesure 1 confocale chromatique conforme à l'invention comprend une source lumineuse 2 configurée pour générer un faisceau lumineux 3, un crayon optique 4 comprenant un objectif à chromatisme axial 5 configuré pour appliquer le faisceau lumineux 3 sur la surface 6 de l'échantillon et une caméra 7. Le dispositif de mesure 1 comprend en outre un système d'analyse spectrale 8 tel qu'un spectrographe 8 configuré pour déterminer une répartition spectrale du faisceau lumineux 3 réfléchi après son passage à travers le crayon optique 4, ainsi que des moyens de traitement 9 du signal permettant d'analyser cette répartition spectrale afin de calculer la position axiale de la surface 6.

Le crayon optique 4 présente une extrémité d'entrée 10 raccordée à la source lumineuse 2 et une extrémité de sortie 11 configurée pour être placée à proximité de la surface 6 de l'échantillon. L'objectif à chromatisme axial 5 est logé dans le crayon optique 4 et comprend une série de lentilles présentant un chromatisme axial connu qui sont disposées dans l'objectif 5 de sorte que leurs axes optiques soient coaxiaux. Le cas échéant, le crayon optique 4 peut en outre comprendre un hublot 12 (c'est-à-dire une lame plane de protection, dépourvue d'aberrations chromatiques) monté au niveau de son extrémité de sortie 11, en aval de l'objectif à chromatisme axial 5 (l'amont et l'avant étant définis suivant le sens de propagation de la lumière incidente dans le crayon optique 4), c'est-à-dire entre l'objectif 5 et la surface 6 de l'échantillon.

La source lumineuse 2, le crayon optique 4 et le spectrographe 8 peuvent être reliés par l'intermédiaire d'au moins une fibre optique 13. La source lumineuse 2 et le spectrographe 8 peuvent être logés dans un coffret optronique, qui peut être relié au crayon optique 4 par l'intermédiaire d'au moins une fibre optique 13 et aux moyens de traitement 9 par un câble. Le cas échéant, le crayon optique 4 et/ou les moyens de traitement 9 peuvent également être logé dans le coffret optronique. On notera que, dans ce cas, la fibre optique 13 est optionnelle.

La source lumineuse 2 est configurée pour générer un faisceau lumineux 3, de préférence polychromatique (par opposition à une source lumineuse 2 monochromatique tel qu'un laser). La mise en oeuvre d'un faisceau lumineux 3 polychromatique qui permet en effet de réaliser des mesures confocales chromatiques et notamment de présenter un chromatisme axial le long de l'axe de mesure, ce qui permet une mesure de distance sans aucun déplacement du dispositif de mesure 1. La source lumineuse 2 peut en particulier comprendre une lumière blanche, par exemple une ou plusieurs diodes électroluminescentes.

Par ailleurs, le faisceau lumineux 3 a une faible cohérence (spatiale et temporelle), par opposition au faisceau laser qui est cohérent spatialement et temporellement.

Dans une première forme de réalisation, le dispositif de mesure 1 est un « capteur point ». La source lumineuse 2 étant polychromatique, le crayon optique 4 forme un ensemble d'images monochromatiques de la source lumineuse 2 (ou, plus précisément, de l'extrémité de la fibre optique 13 qui agit comme un sténopé). Ces images définissent un segment de droite d'observation dans l'espace, chaque image de la source étant définie par sa longueur d'onde et sa distance de focalisation par rapport au crayon optique 4. Ce même crayon optique 4 collecte en outre le faisceau lumineux 3 rétrodiffusé pour former, sur l'extrémité de la fibre optique 13 qui joue le rôle d'un trou de filtrage spatial, une image polychromatique commune de l'ensemble des images monochromatiques. Cette image polychromatique est composée par les longueurs d'ondes des différentes interfaces rencontrées par le faisceau lumineux 3 dans l'échantillon.

L'image polychromatique est alors transmise, via la fibre optique 13, au spectrographe 8. Le spectre qui y est mesuré montre alors un ou plusieurs pics correspondant aux interfaces rencontrées par le faisceau lumineux 3 lorsque l'on place l'échantillon à l'intérieur de l'espace couvert par le chromatisme (*i.e.* le segment de droite d'observation). Par exemple, si l'échantillon comprend une surface 6 opaque, il existe une seule longueur d'onde de la source lumineuse 2 pour laquelle on obtient une image nette sur la surface 6. Les moyens de traitement 9 du signal permettent alors de déduire la distance entre le crayon optique 4 et la surface 6 à partir de la longueur d'onde identifiée par le spectrographe 8.

Dans une deuxième forme de réalisation, le dispositif de mesure 1 est un « capteur ligne » et permet la mesure simultanée d'un ensemble de points alignés le long d'une ligne. A la différence du capteur point, le capteur ligne comprend une série de fibres optiques 13 configurées pour guider la lumière générée par la source lumineuse 2 jusqu'à l'entrée du crayon optique 4 et, en retour, du crayon optique 4 jusqu'au spectrographe 8. Plus précisément, l'extrémité de ces fibres optiques 13 sont organisées spatialement de façon à définir un champ latéral de mesure (notamment une ligne). Dans un mode de réalisation, les faisceaux lumineux émis par chacune de ces fibres optiques 13 se propagent alors dans le crayon optique 4 via un séparateur jusqu'à la surface 6, où ils sont dispersés le long de l'axe optique. De manière analogue au capteur point, chaque longueur d'onde parfaitement focalisée pour chaque point du champ latéral est réfléchie par la surface 6 de l'échantillon, se propage en sens inverse dans le crayon optique 4 et est guidée, via le séparateur et les fibres optiques 13, jusqu'à l'entrée du spectrographe 8. Le spectrographe 8 comprend alors un photodétecteur afin de visualiser les spectres correspondant à chaque point de mesure de la ligne.

Dans une troisième forme de réalisation, le dispositif est un « capteur multipoints ». Il s'agit d'un capteur dans lequel plusieurs sources lumineuses sont disposées de façon ordonnée, mais pas nécessairement alignées comme dans le cas d'un capteur ligne. Il peut s'agir par exemple de trois points en triangle, de quatre points en carré ou rectangle, de N points répartis sur un cercle, et d'une façon générale de N points répartis selon un motif géométrique. Ces points source peuvent être l'extrémité d'une fibre optique 13 issue chacune d'un contrôleur monopoint, ou les extrémités des faisceaux de fibres optiques 13 dans lequel les points ne sont pas nécessairement alignés.

Afin de permettre de visualiser la surface 6 à étudier, et en particulier le point de mesure, la caméra 7 est fixée à proximité de l'extrémité de sortie 11 du crayon optique 4, entre une partie aval de l'objectif à chromatisme axial 5 et la surface 6 de l'échantillon, de sorte qu'une partie du faisceau lumineux 3 provenant de la source lumineuse 2 et sortant de l'objectif à chromatisme axial 5 est obturée par la caméra 7 au niveau de l'extrémité de sortie 11 du crayon optique 4 et qu'une autre partie du faisceau lumineux 3 contourne la caméra 7 et atteint la surface 6 de l'échantillon. La taille de la caméra 7 est donc choisie de sorte qu'elle n'obture que partiellement le faisceau lumineux 3, afin de ne pas empêcher la mesure simultanée par le dispositif de mesure 1.

La caméra 7 étant placée en partie aval de l'objectif à chromatisme axial 5, l'image obtenue par la caméra 7 est nette et n'est pas déformée par les aberrations du crayon optique 4 ni par le chromatisme axial de l'objectif 5. De plus, le dispositif de mesure 1 fonctionnant sur le principe du codage confocal chromatique, l'obturation partielle du faisceau lumineux 3 n'empêche pas la mesure et ne dégrade pas les performances du dispositif de mesure 1 de manière significative. Bien au contraire, il ressort que l'obturation partielle du faisceau lumineux 3 permet de réduire certaines aberrations optiques et d'améliorer la précision de mesure sur des objets transparents ayant des épaisseurs importantes ou des formes très marquées (comme des tubes transparents épais). Ainsi, la présence de la caméra 7 a uniquement pour effet de réduire l'intensité lumineuse du faisceau lumineux 3, ce qui n'empêche pas la réalisation de la mesure par le dispositif de mesure 1. Enfin, la caméra 7 étant placée dans le faisceau lumineux 3 du crayon optique 4, son champ de vision 21 est positionné de façon optimale par rapport au sport de mesure.

La caméra 7 peut être fixée dans le crayon optique 4 ou en dehors du crayon optique 4, sur son extrémité de sortie 11.

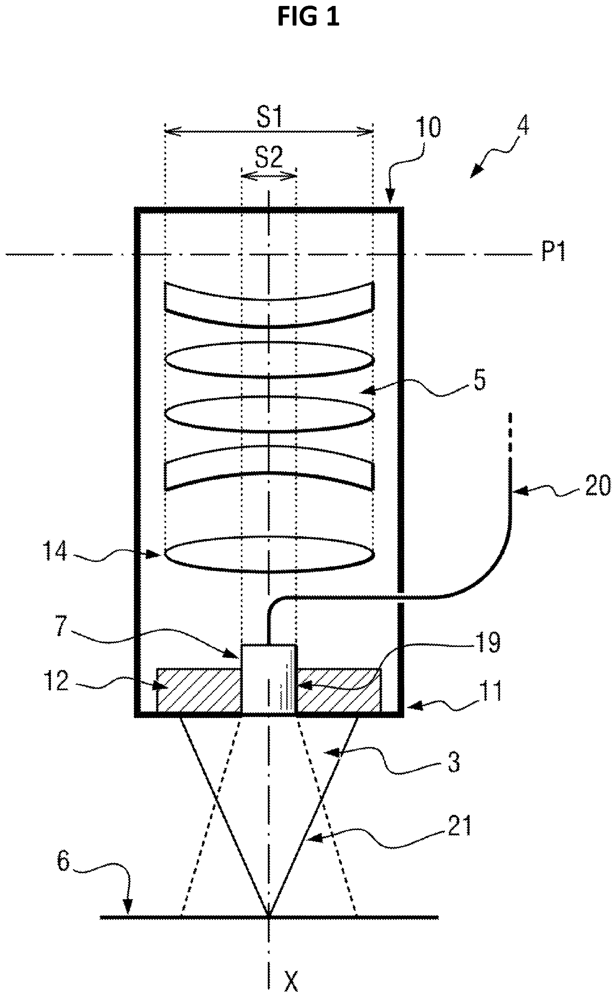

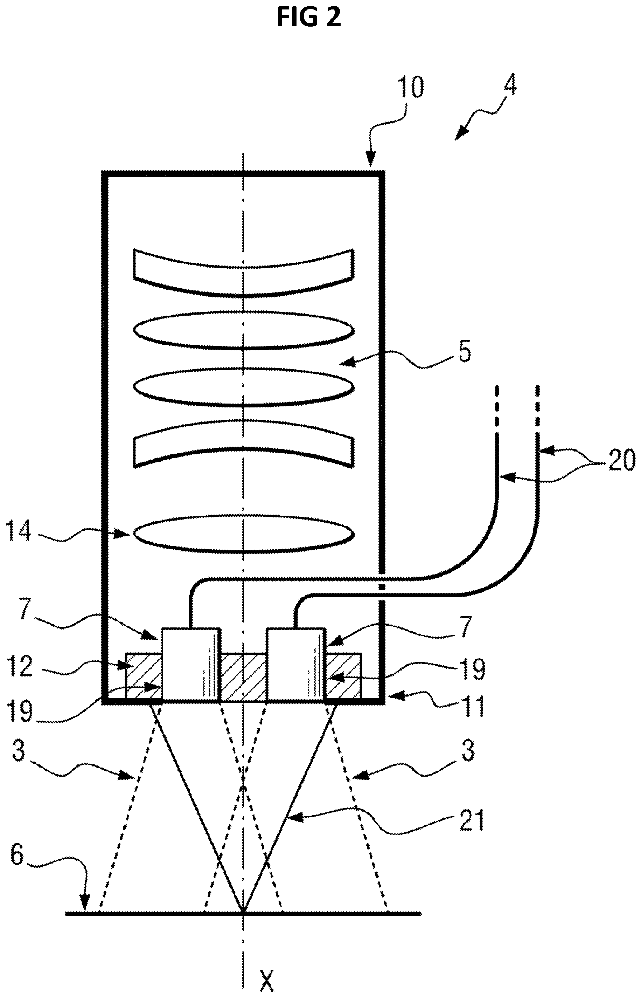

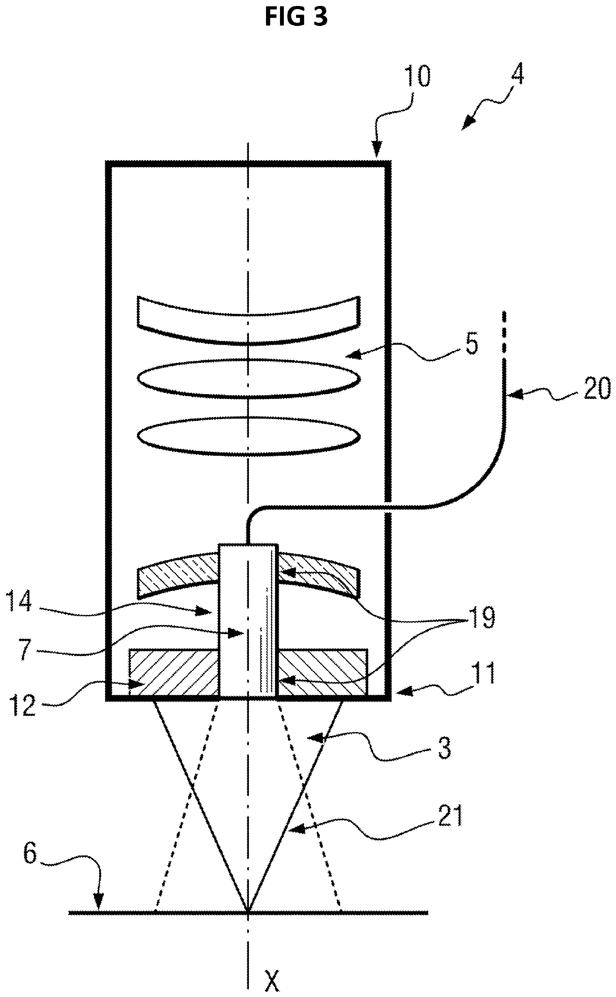

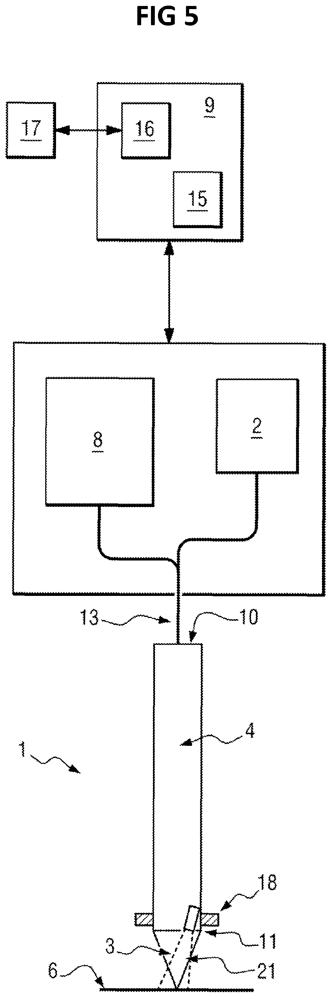

La caméra 7 peut être centrée sur l'axe de propagation X du faisceau lumineux 3 (figures 1, 3 et 4). En variante, la caméra 7 peut être décentrée par rapport à l'axe de propagation X du faisceau lumineux 3 (figure 2), et le cas échéant être positionnée de sorte que son axe de visée soit incliné par rapport à l'axe de propagation X (figure 5).

Afin de ne pas obturer tout le faisceau lumineux 3 et de permettre la réalisation de la mesure, la section du faisceau lumineux 3 qui occupée par la caméra 7 est inférieure à la section totale du faisceau lumineux 3 sortant du crayon optique 4. Pour cela, la surface S1 (vue en coupe sur la figure 1) de la lentille 14 la plus en aval du crayon optique 4, qui peut correspondre à la lentille 14 la plus en aval de l'objectif à chromatisme axial 5 ou au hublot 12 du crayon optique 4, est plus grande que la surface de la caméra 7. Par surface S1 de la lentille 14, on comprendra ici la projection orthogonale de la lentille 14 dans un premier plan P1 qui est perpendiculaire à l'axe de propagation X du faisceau lumineux 3 à travers cette lentille 14. De même, par surface S2 de la caméra 7, on comprendra ici la projection orthogonale de la caméra 7 dans ce premier plan P1.

La caméra 7 quant à elle est choisie de sorte que sa surface S2 soit inférieure à celle de la lentille 14, de préférence au moins deux fois plus faible, par exemple au moins quatre fois plus faible afin de limiter la perte de signal lumineux lors de la mesure.

La caméra 7 peut donc être une caméra 7 miniature. Ce type de caméra 7 est notamment utilisé dans le domaine de l'endoscopie médicale. Typiquement, il existe des caméras 7 dont la surface (au sens de la définition donnée ci-dessus) est comprise entre 3,0 mm² et 30,0 mm² environ (soit un diamètre compris entre environ 1,0 mm et environ 3,1 mm si la caméra 7 est sensiblement tubulaire).

Un exemple de caméra 7 susceptible d'être utilisé dans le dispositif de mesure 1 est commercialisé par la société MIKROP, qui utilise un capteur Ominivision (référence OV6946) ayant les caractéristiques suivantes : résolution 400x400 pixels ; taille optique : 1/18" ; mode de balayage progressif; fréquence de trame (frame rate) 160 Kpixel (400x400) : 30 fps ; dimension : 950 µm x 940 µm. Une caméra 7 commercialisée par MIKROP qui intègre ce capteur comprend alors un objectif présentant les caractéristiques suivantes : une ouverture comprise entre 5.80 et 6.40 ; un champ de vision compris entre 90° et 140° ; un diamètre de 1,50 mm ; une longueur de 8,9 mm ; une distance de travail minimale de 2 mm et une profondeur de champ comprise entre 2 mm et 100 mm.

L'utilisation de caméras 7 miniatures permet de conserver des dimensions conventionnelles pour le crayon optique 4 et les lentilles de l'objectif à chromatisme axial 5. En particulier, il n'est pas nécessaire d'utiliser des lentilles plus larges que celles qui sont habituellement utilisées dans les dispositifs de mesure confocale chromatique actuels. Typiquement, la lentille 14 peut présenter un diamètre de l'ordre de 3 mm à 10 mm dans les dispositifs de faible diamètre. D'une façon générale, le diamètre de la lentille 14 est de préférence au moins deux fois supérieur à celui de la caméra.

De préférence, la caméra 7 présente une profondeur de champ adaptée pour permettre la réalisation d'images nettes sur toute la plage de travail du dispositif de mesure 1. Ce type de caméra 7 est donc généralement dépourvu de dispositif de focalisation manuelle ou automatique (« autofocus »). La plage de travail du dispositif de mesure 1 (couvrant toutes les mesures de distance pouvant être réalisées par le dispositif de mesure 1) peut être comprise entre 2 mm et 100 mm. La caméra 7 est donc choisie de sorte à présenter une profondeur de champ couvrant au moins l'intervalle compris entre 2 mm et 100 mm.

On notera que le dispositif peut comprendre plusieurs caméras 7 fixées à proximité de l'extrémité de sortie 11 du capteur optique (voir par exemple figure 2) afin d'obtenir des images suivant différents points de vue, voire d'obtenir une vision stéréoscopique permettant de créer une image tridimensionnelle de l'échantillon. Chacune des caméras 7 est alors placée dans le faisceau lumineux 3 de sorte à obturer partiellement ce faisceau, tout en permettant à une partie de ce faisceau de passer afin d'atteindre la surface 6 de l'échantillon. La somme des surfaces S2 des caméras 7 (telles que définies ci-avant) reste donc inférieure à la surface S1 de la lentille 14. De préférence, la somme des surfaces S2 des caméras 7 est inférieure à la moitié de la surface S1 de la lentille 14, de préférence au quart de la surface S1 de la lentille 14.

Dans un premier mode de réalisation, la caméra 7 est fixée sur l'extrémité de sortie 11 du capteur optique.

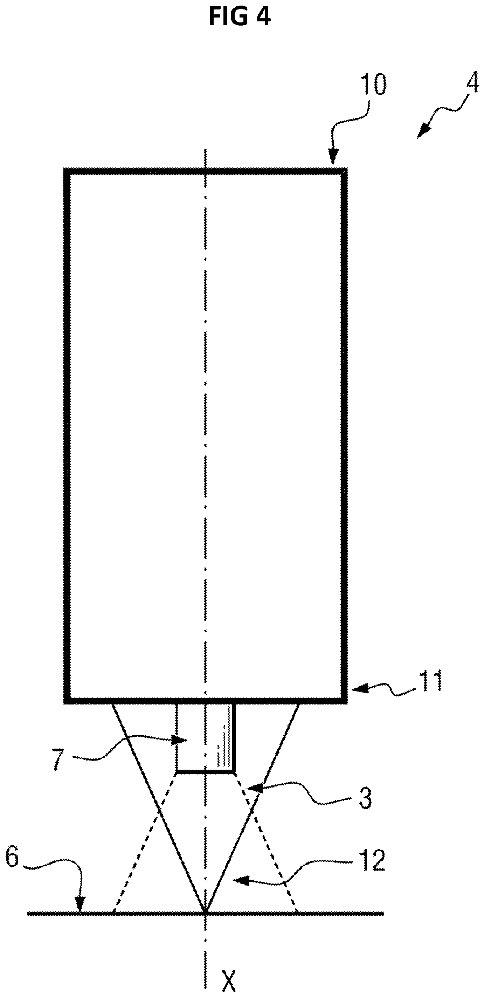

Par exemple, le crayon optique 4 peut comprendre une lentille achromatique placée au niveau de l'extrémité de sortie 11 du crayon optique 4. La lentille achromatique peut par exemple correspondre au hublot 12 du crayon optique 4. La caméra 7 peut alors être fixée, par exemple par collage, sur l'une des faces de la lentille achromatique 12, par exemple la face aval (face de sortie du faisceau incident) (voir par exemple figure 4).

En variante, la caméra 7 peut être fixée sur une lentille achromatique qui est rapportée et fixée sur l'extrémité de sortie 11 du crayon optique 4, par exemple par vissage ou encliquetage.

Ce premier mode de réalisation présente l'avantage d'être simple à réaliser et de ne pas imposer la modification du crayon optique 4, en dehors de la prise en compte de l'ajout éventuel de la lentille achromatique (qui a un impact sur le chemin optique du faisceau lumineux 3) dans le calcul optique effectué par les moyens de traitement 9. En revanche, le placement de la caméra 7 en dehors du crayon optique 4 réduit la distance de travail disponible.

Dans un deuxième mode de réalisation, un passage traversant 19 est formé dans l'une des lentilles du crayon optique 4 et la caméra 7 est logée au moins partiellement dans le passage traversant. La lentille est donc percée pour recevoir la caméra 7, ce qui permet de réduire l'encombrement axial du dispositif de mesure 1 et en particulier de ne pas impacter sa distance de travail.

La lentille qui est percée peut correspondre à la lentille 14 la plus en aval de l'objectif à chromatisme axial 5, c'est-à-dire la dernière lentille de l'objectif 5 qui est la plus proche de l'extrémité de sortie 11 du crayon optique 4. Le choix de cette lentille 14 permet d'éviter que l'objectif à chromatisme axial 5 déforme l'image obtenue par la caméra 7.

En variante, la lentille qui est percée peut correspondre à une lentille achromatique placée en aval de l'objectif à chromatisme axial 5, typiquement le hublot 12 du crayon optique 4.

Selon une autre variante encore, à la fois la lentille 14 la plus en aval de l'objectif à chromatisme axial 5 et une lentille achromatique, typiquement le hublot 12, peuvent être percés afin de recevoir la caméra 7.

En pratique, le choix de la ou des lentilles 12, 14 percées dépend de la configuration du dispositif de mesure 1, de la dimension de la caméra 7 suivant la direction de l'axe de propagation X du faisceau lumineux 3 et de la distance de travail recherchée. En effet, lorsque la distance entre la lentille 14 la plus en aval de l'objectif 5 et le hublot 12 est inférieure à la longueur de la caméra 7 et que l'on souhaite maximiser la distance de travail, la lentille 14 et le hublot 12 pourront être percés pour loger intégralement la caméra 7. En revanche, lorsque cette distance est inférieure à la longueur de la caméra 7 ou lorsque la distance de travail disponible est ajustable, il est possible de ne percer que le hublot 12. Enfin, il peut également être envisagé de ne percer que la lentille 14 ou les deux lentilles les plus en aval, lorsque le crayon optique 4 est dépourvu de hublot 12 ou que la configuration de l'objectif 5 permet de loger la caméra 7 dans ces deux lentilles aval.

On notera que la ou les lentilles 12, 14 peuvent en outre être percées pour, le cas échéant, permettre le passage de câbles d'alimentation et/ou de transmission de données 20 de la caméra 7 vers les moyens de traitement 9. En variante, un orifice peut être formé dans le corps du crayon optique 4 afin de permettre la sortie du ou des câbles 20 de la caméra 7 vers les moyens de traitement 9.

La lentille 12, 14 peut être percée par tous moyens connus, par exemple par carottage optique, typiquement par usinage diamant, ou encore par trépanage.

Le spectrographe 8 comporte un capteur optique configuré pour mesurer une énergie totale (en J) du faisceau lumineux 3 réfléchi par la surface 6 de l'échantillon à travers l'objectif 5 de projection pendant un intervalle d'intégration (en s). Les moyens de traitement du signal 9 comprennent une unité de traitement 15, par exemple un ordinateur ou un serveur disposant de moyens de traitement, adaptée pour exécuter le procédé de mesure confocale chromatique. L'unité de traitement 15 peut par exemple comprendre une mémoire dans laquelle sont stockées les instructions de code pour l'exécution du procédé de mesure confocale chromatique et un calculateur de type processeur, microprocesseur, microcontrôleur, etc. configuré pour exécuter ces instructions. L'équipement comprend également des moyens de commande (écran tactile, clavier, souris, boutons, etc.).

La caméra 7 peut être connectée, par exemple par voie filaire, aux moyens de traitement 9 ou à des moyens de traitement 9 dédiés. Les moyens de traitement 9 comprennent en particulier un système d'acquisition 16 configuré pour recevoir les images capturées par la caméra 7 et les affiche sur un dispositif d'affichage 17 tel qu'un écran afin de permettre à un utilisateur de visualiser en temps réel la position du point de mesure sur la surface 6.

Dans la mesure où la caméra 7 obture une partie du faisceau lumineux 3, le dispositif de mesure 1 peut en outre comprendre une lumière 18 fixée sur le crayon optique 4 et configurée pour éclairer la surface 6 de l'échantillon. L'éclairage de la surface 6 de l'échantillon permet en effet d'améliorer la qualité de l'image, en particulier lorsque l'éclairage ambiant n'est pas suffisant ou que le dispositif de mesure 1 masque l'éclairage ambiant.

La lumière 18 peut être intégrée à la caméra 7. Par exemple, la caméra 7 peut embarquer une bague de diodes électroluminescente montée autour de son optique.

En variante, la lumière 18 peut être rapportée et fixée sur le crayon optique 4 à proximité de l'extrémité de sortie 11 (voir figure 5). Par exemple, le dispositif de mesure 1 peut comprendre une bague annulaire comprenant des diodes électroluminescentes qui est rapportée et fixée autour de son extrémité de sortie 11.

On notera que le principe optique de la microscopie confocale chromatique est par nature insensible à la lumière ambiante. En particulier, la précision de mesure et la sensibilité du dispositif de mesure 1 ne sont généralement pas affectées par la présence de l'éclairage de la lumière 18. Le dispositif de mesure 1 peut donc être utilisé normalement sans être perturbé par l'éclairage.

Le cas échéant, lorsque la surface 6 à mesurer est très réfléchissante, la présence de la lumière 18 peut éventuellement perturber la mesure. Dans ce cas, L'unité de traitement peut être configurée de sorte à moduler l'éclairage de la lumière 18 (en particulier lorsqu'elle comprend des diodes électroluminescentes qui sont adressables) afin de synchroniser la mesure et l'éclairage en les décalant temporellement.

## Revendications

1. Dispositif de mesure (1) confocale chromatique d'un paramètre d'une surface (6) d'un échantillon, le dispositif comprenant :
- une source lumineuse (2) configurée pour générer un faisceau lumineux (3) ;
- un crayon optique (4) comprenant un objectif à chromatisme axial (5) configuré pour appliquer le faisceau lumineux (3) sur la surface (6) de l'échantillon, le crayon optique (4) présentant une extrémité d'entrée (10) raccordée à la source lumineuse (2) et une extrémité de sortie (11) configurée pour être placée à proximité de la surface (6) de l'échantillon ; et
- une caméra (7) fixée à proximité de l'extrémité de sortie (11) du crayon optique (4), entre l'objectif à chromatisme axial (5) et la surface (6) de l'échantillon, de sorte qu'une partie du faisceau lumineux (3) provenant de la source lumineuse (2) et sortant de l'objectif à chromatisme axial (5) est obturée par la caméra (7) au niveau de l'extrémité de sortie (11) du crayon optique (4) et qu'une autre partie du faisceau lumineux (3) n'est pas obturée par la caméra (7) et atteint la surface (6) de l'échantillon.

2. Dispositif de mesure (1) selon la revendication 1, dans lequel le crayon optique (4) comprend une lentille (12, 14) placée à proximité de l'extrémité de sortie (11) du crayon optique (4), une première surface (S1), correspondant à la projection orthogonale de la lentille (12, 14) dans un premier plan (P1) qui est perpendiculaire à un axe de propagation (X) du faisceau lumineux (3) à travers la lentille (12, 14), étant plus grande qu'une deuxième surface (S2), correspondant à la projection orthogonale de la caméra (7) dans le premier plan (P1), de sorte que la caméra (7) n'obture que partiellement le champ optique de la lentille (12, 14).

3. Dispositif de mesure (1) selon la revendication 2, dans lequel la première surface (S1) est au moins deux fois plus grande que la deuxième surface (S2), de préférence au moins quatre fois plus grande.

4. Dispositif de mesure (1) selon l'une des revendications 2 et 3, dans lequel un passage traversant (19) est formé dans la lentille (12, 14) et la caméra (7) est logée au moins partiellement dans le passage traversant (19).

5. Dispositif de mesure (1) selon la revendication 4, dans lequel la lentille (14) présente un chromatisme axial et fait partie de l'objectif à chromatisme axial (5).

6. Dispositif de mesure (1) selon l'une des revendications 2 à 4, dans lequel la lentille (12) est achromatique et est placée entre l'objectif à chromatisme axial (5) et la caméra (7), un passage traversant (19) étant formé dans la lentille (14) achromatique et la caméra (7) étant logée au moins partiellement dans le passage traversant (19).

7. Dispositif de mesure (1) selon l'une des revendications 1 à 3, dans lequel la caméra (7) est placée entre le crayon optique (4) et la surface (6) à mesurer.

8. Dispositif de mesure (1) selon l'une des revendications 1 à 7, comprenant en outre une caméra supplémentaire (7), fixée à proximité de l'extrémité de sortie (11) du crayon optique (4), entre l'objectif à chromatisme axial (5) et la surface (6) de l'échantillon de sorte qu'une partie du faisceau lumineux (3) provenant de la source lumineuse (2) et sortant de l'objectif à chromatisme axial (5) est également obturée par la caméra supplémentaire (7) au niveau de l'extrémité de sortie (11) du crayon optique (4) et que l'autre partie du faisceau lumineux (3) contourne également la caméra supplémentaire (7) et atteint la surface (6) de l'échantillon.

9. Dispositif de mesure (1) selon l'une des revendications 1 à 8, dans lequel une profondeur de champ de la caméra (7) est comprise entre 2 mm et 100 mm.

10. Dispositif de mesure (1) selon l'une des revendications 1 à 9, comprenant en outre une lumière (18) fixée sur le dispositif de mesure (1) et configurée pour éclairer la surface (6) de l'échantillon.

11. Dispositif de mesure (1) selon la revendication 10, dans lequel la lumière (18) est intégrée à la caméra (7) ou est rapportée et fixée sur le crayon optique (4) à proximité de l'extrémité de sortie (11).

12. Dispositif de mesure (1) selon l'une des revendications 1 à 11, comprenant en outre un système d'analyse spectrale (8) configuré pour déterminer une répartition spectrale (8) du faisceau lumineux (3) réfléchi par la surface (6) de l'échantillon.

## Patentansprüche

1. Vorrichtung (1) zur chromatisch konfokalen Messung eines Parameters einer Oberfläche (6) einer Probe, wobei die Vorrichtung umfasst:
- eine Lichtquelle (2), die so konfiguriert ist, dass sie einen Lichtstrahl (3) erzeugt;
- einen Lichtgriffel (4) mit einer axial chromatischen Linse (5), die so konfiguriert ist, dass sie den Lichtstrahl (3) auf die Oberfläche (6) der Probe richtet, wobei der Lichtgriffel (4) ein mit der Lichtquelle (2) verbundenes Eingangsende (10) und ein Ausgangsende (11) aufweist, das so konfiguriert ist, dass es in der Nähe der Oberfläche (6) der Probe angeordnet werden kann; und
- eine Kamera (7), die in der Nähe des Ausgangsendes (11) des Lichtgriffels (4) angebracht ist, zwischen dem axialchromatischen Objektiv (5) und der Oberfläche (6) der Probe, so dass ein Teil des von der Lichtquelle (2) kommenden und aus dem axialchromatischen Objektiv (5) austretenden Lichtstrahls (3) durch die Kamera (7) am Ausgangsende (11) des Lichtgriffels (4) abgeschirmt wird und ein anderer Teil des Lichtstrahls (3) nicht von der Kamera (7) abgeschirmt wird und die Oberfläche (6) der Probe erreicht.

2. Messvorrichtung (1) nach Anspruch 1, wobei der Lichtgriffel (4) eine Linse (12, 14) umfasst, die in der Nähe des Ausgangsendes (11) des Lichtgriffels (4) angeordnet ist, eine erste Fläche (S1), die der orthogonalen Projektion der Linse (12, 14) in einer ersten Ebene (P1) entspricht, die senkrecht zu einer Ausbreitungsachse (X) des Lichtstrahls (3) durch die Linse (12, 14) steht, die größer ist als eine zweite Fläche (S2), die der orthogonalen Projektion der Kamera (7) in die erste Ebene (P1) entspricht, so dass die Kamera (7) das optische Feld der Linse (12, 14) nur teilweise verschließt.

3. Messvorrichtung (1) nach Anspruch 2, wobei die erste Fläche (S1) mindestens doppelt so groß wie die zweite Fläche (S2) ist, vorzugsweise mindestens viermal so groß.

4. Messvorrichtung (1) nach einem der Ansprüche 2 und 3, wobei in der Linse (12, 14) ein Durchgang (19) ausgebildet ist und die Kamera (7) zumindest teilweise in dem Durchgang (19) untergebracht ist.

5. Messvorrichtung (1) nach Anspruch 4, wobei die Linse (14) axiale Chromatizität aufweist und Teil des axial chromatischen Objektivs (5) ist.

6. Messvorrichtung (1) nach einem der Ansprüche 2 bis 4, wobei die Linse (12) achromatisch ist und zwischen dem axial chromatischen Objektiv (5) und der Kamera (7) angeordnet ist, wobei in der achromatischen Linse (14) ein Durchgang (19) ausgebildet ist und die Kamera (7) zumindest teilweise in dem Durchgang (19) untergebracht ist.

7. Messvorrichtung (1) nach einem der Ansprüche 1 bis 3, wobei die Kamera (7) zwischen dem Lichtgriffel (4) und der zu messenden Oberfläche (6) angeordnet ist.

8. Messvorrichtung (1) nach einem der Ansprüche 1 bis 7, die zusätzlich eine weitere Kamera (7) umfasst, die in der Nähe des Austrittsendes (11) des Lichtgriffels (4) zwischen dem Objektiv mit axialer Chromatizität (5) und der Oberfläche (6) der Probe angebracht ist, so dass ein Teil des von der Lichtquelle (2) kommenden und aus dem Objektiv mit axialer Chromatizität (5) austretenden Lichtstrahls (3) ebenfalls von der zusätzlichen Kamera (7) am Ausgangsende (11) des Lichtgriffels (4) ebenfalls von der zusätzlichen Kamera (7) abgeschirmt wird und der andere Teil des Lichtstrahls (3) ebenfalls die zusätzliche Kamera (7) umgeht und die Oberfläche (6) der Probe erreicht.

9. Messvorrichtung (1) nach einem der Ansprüche 1 bis 8, wobei eine Schärfentiefe der Kamera (7) zwischen 2 mm und 100 mm liegt.

10. Messvorrichtung (1) nach einem der Ansprüche 1 bis 9, die zusätzlich eine an der Messvorrichtung (1) befestigte Leuchte (18) umfasst, die so konfiguriert ist, dass sie die Oberfläche (6) der Probe beleuchtet.

11. Messvorrichtung (1) nach Anspruch 10, wobei die Lichtquelle (18) in die Kamera (7) integriert oder am Lichtgriffel (4) in der Nähe des Ausgangsendes (11) angebracht und befestigt ist.

12. Messvorrichtung (1) nach einem der Ansprüche 1 bis 11, die außerdem ein Spektralanalysesystem (8) umfasst, das so konfiguriert ist, dass es eine Spektralverteilungs von dem von der Oberfläche (6) der Probe reflektierten Lichtstrahl (3) bestimmt.

## Claims

1. A chromatic confocal measurement device (1) for measuring a parameter of a surface (6) of a sample, the device comprising:
- a light source (2) configured to generate a light beam (3);
- a light pen (4) comprising an objective with axial chromatism (5) configured to apply the light beam (3) on the surface (6) of the sample, the light pen (4) having an input end (10) connected to the light source (2) and an output end (11) configured to be placed close to the surface (6) of the sample; and
- a camera (7) fixed close to the output end (11) of the light pen (4), between the objective with axial chromatism (5) and the surface (6) of the sample, such that a portion of the light beam (3) originating from the light source (2) and emerging from the objective with axial chromatism (5) is blocked by the camera (7) at the output end (11) of the light pen (4) and such that another portion of the light beam (3) is not blocked by the camera (7) and reaches the surface (6) of the sample.

2. The measurement device (1) according to claim 1, wherein the light pen (4) comprises a lens (12, 14) placed close to the output end (11) of the light pen (4), a first area (S1), corresponding to the orthogonal projection of the lens (12, 14) in a first plane (P1) which is perpendicular to an axis of propagation (X) of the light beam (3) through the lens (12, 14), being larger than a second area (S2), corresponding to the orthogonal projection of the camera (7) in the first plane (P1), such that the camera (7) only partially blocks the optical field of the lens (12, 14).

3. The measurement device (1) according to claim 2, wherein the first area (S1) is at least twice larger than the second area (S2), preferably at least four times larger.

4. The measurement device (1) according to one of claims 2 and 3, wherein a through-passage (19) is formed in the lens (12, 14), and the camera (7) is at least partially housed in the through-passage (19).

5. The measurement device (1) according to claim 4, wherein the lens (14) has an axial chromatism and forms part of the objective with axial chromatism (5).

6. The measurement device (1) according to one of claims 2 to 4, wherein the lens (12) is achromatic and is placed between the objective with axial chromatism (5) and the camera (7), a through-passage (19) being formed in the achromatic lens (14) and the camera (7) being at least partially housed in the through-passage (19).

7. The measurement device (1) according to one of claims 1 to 3, wherein the camera (7) is placed between the light pen (4) and the surface (6) to be measured.

8. The measurement device (1) according to one of claims 1 to 7, further comprising an additional camera (7), fixed close to the output end (11) of the light pen (4), between the lens with axial chromatism (5) and the surface (6) of the sample, such that a portion of the light beam (3) originating from the light source (2) and emerging from the objective with axial chromatism (5) is also blocked by the additional camera (7) at the output end (11) of the light pen (4) and such that the other portion of the light beam (3) likewise bypasses the additional camera (7) and reaches the surface (6) of the sample.

9. The measurement device (1) according to one of claims 1 to 8, wherein a depth of field of the camera (7) is between 2 mm and 100 mm.

10. The measurement device (1) according to one of claims 1 to 9, further comprising a light (18) fixed on the measurement device (1) and configured to illuminate the surface (6) of the sample.

11. The measurement device (1) according to claim 10, wherein the light (18) is incorporated to the camera (7) or is attached and fixed on the light pen (4) close to the output end (11).

12. The measurement device (1) according to one of claims 1 to 11, further comprising a spectral analysis system (8) configured for determining a spectral distribution (8) of the light beam (3) reflected by the surface (6) of the sample.
